Europäisches Patentamt

**(19)** European Patent Office

Office européen des brevets

**(11)** Publication number : **0 399 035 B1**

# **(12)** EUROPEAN PATENT SPECIFICATION

**(45)** Date of publication of patent specification :
**21.04.93 Bulletin 93/16**

**(51)** Int. Cl.⁵ : **B09B 5/00,** C02F 11/00, C01G 28/02, B03D 1/12

**(21)** Application number : **90901041.5**

**(22)** Date of filing : **14.12.89**

**(86)** International application number :
**PCT/NL89/00095**

**(87)** International publication number :
**WO 90/06820 28.06.90 Gazette 90/15**

**(54) METHOD OF REMOVING ARSENIC AND/OR OTHER AMPHOTERIC ELEMENTS FROM SLUDGE AND SOLID WASTE MATERIALS.**

**(30)** Priority : **14.12.88 NL 8803057**
**17.07.89 NL 8901843**

**(43)** Date of publication of application :
**28.11.90 Bulletin 90/48**

**(45)** Publication of the grant of the patent :
**21.04.93 Bulletin 93/16**

**(84)** Designated Contracting States :
**AT BE CH DE ES FR GB IT LI LU NL SE**

**(56)** References cited :
CH-A- 651 220
DE-A- 510 750
DE-A- 1 155 606
DE-A- 3 134 734
US-A- 1 504 627
US-A- 1 505 718
US-A- 3 664 950
US-A- 3 929 598
PATENT ABSTRACTS OF JAPAN, vol. 4, no. 34 (C-3), 22 March 1980; & JP, A, 55008843 (MITSUBISHI RAYON) 22 January 1980

**(56)** References cited :
CHEMICAL ABSTRACTS, vol. 108, no. 16, 18 April 1988, Columbus, Ohio, US, M. Chanda et al.: "Ligand exchange sorption of arsenate and arsenite anions by chelating resins in ferric ion form. I. Weak-base chelating resin Dow XFS-4195", page 351, abstract no. 137265h & React. Polym. Ion Exch. Sorbents, 1988, 7(2-3), 251-61

**(73)** Proprietor : **TECHNISCHE UNIVERSITEIT DELFT**
**Posbus 5**
**NL-2600 AA Delft (NL)**

**(72)** Inventor : **VAN BREEMEN, A.N. Vakgroep Gezondheidsstechniek**
**en Waterbeheersing Technische Universiteit Delft**
**Postbus 5048 NL-2600 GA Delft (NL)**

**(74)** Representative : **Smulders, Theodorus A.H.J., Ir. et al**
**Vereenigde Octrooibureaux Nieuwe Parklaan 97**
**NL-2587 BN 's-Gravenhage (NL)**

EP 0 399 035 B1

## Description

The invention relates to a method of removing arsenic and/or other amphoteric elements from sludge and solid waste materials.

Sludge comprising an aqueous suspension of iron hydroxide flocks is formed as a by-product in the purification of water with the aid of flocculation techniques. This iron hydroxide has adsorbed several kinds of suspended and dissolved impurities from the water during flocculation and in consequence thereof, it cannot be re-used without additional measures, after decomposition, for a water purification process, whereas an agricultural or metallurgical utilisation is not feasible either. In most cases, therefore, the iron hydroxide sludge, after dehydration in drying beds, is dumped on a dumping site and allowed to remain there.

In view of an increasing shortage of available room for dumping sites, the demand for re-use or useful application of iron hydroxide sludge is becoming more and more topical. Moreover, the perception is growing that impurities from the sludge and especially the toxic components thereof such as arsenic compounds will form a serious threat to the environment. Therefore, there is need for a method which will permit the iron hydroxide sludge derived from a water purification process or from a dumping site to be freed from noxious substances in such a way that it is suitable for reuse or for useful applications.

In accordance with the invention, a method has been found for removing the noxious element arsenic in good efficiency from iron hydroxide sludge. This method may, in principle, also be used for the removal of other undesired elements and especially amphoteric elements such as e.g. phosphorus, chromium, aluminium, manganese and/or zinc, so as to render the sludge better suitable for re-use. Further, it appears that the method is not only applicable to iron hydroxide sludge of whatever origin, but also to clay-containing and other sludge types and several types of solid waste materials, thus offering a prospect on a useful destination for such sludge types and waste materials.

The invented method is generally characterised by the following steps performed in succession:

- subjecting the sludge or solid waste materials to a thermal treatment in the presence of air or oxygen and of an alkaline reagent for combustion of organic and decomposition of inorganic components,
- extracting the thermally treated material with water for removal of the arsenic and/or other amphoteric elements in anion form from it,
- treating the resulting extract with an anion exchanger in hydroxyl form for binding the arsenic and the like in anion form to that anion exchanger,
- treating the anion exchanger loaded with said anions with an alkaline aqueous liquid for elution of the arsenic and the like from it and regeneration of the anion exchanger, and
- treating the eluate with a precipitant for separation of the arsenic and the like from it in the form of an isoluble salt.

In this way, the purpose of the invention can be reached efficiently. If the starting material is an iron hydroxide sludge, then the arsenic and other amphoteric elements as far as present can be removed from it with high efficiency, thus rendering the sludge better suitable for re-use or useful application. Should in spite thereof another undesired element such as cadmium be present, which cannot be removed with the invented method, then such an element may be easily removed lateron by other methods since the sludge has become better accessible to such methods. If the starting material is a clay-containing sludge, then this sludge will be better suitable for agricultural utilisations after completion of the invented method. Solid waste materials of other sources may also find a better destination than in the past, after being subjected to the invented method.

The arsenic removed from the sludge or solid waste materials becomes available in the form of an insoluble salt (e.g. calcium arsenate) which occupies only a very small volume, in a relative sense, and which can easily be stored. The same applies to other amphoteric elements which are removed from the starting material, such as e.g. phosphorus, chromium, aluminium, manganese, zinc, which become available in the form of an insoluble phosphate, chromate, aluminate, manganate and zincate, respectively. Applications for these substances are easily conceivable.

The invented method will now be described in more detail.

The starting material for the invented method may be any type of sludge or solid waste materials wherein arsenic and/or other amphoteric elements are present.

The term "sludge" is understood to denote a suspension of solid particles in water wherein the water content may vary considerably and wherein the solid particles may differ largely in composition, dependent from the origin of the sludge.

A very useful starting material is the iron hydroxide sludge generated as a by-product during the purification of surface water for the sake of drinking water supply. In this purification process, use is normally made of a flocculation method wherein, after addition of a soluble iron salt to the water, iron hydroxide is caused to precipitate from the water in flock form. The flocculating iron hydroxide adsorbs several kinds of suspended and dissolved impurities, mostly including arsenic compounds and phosphates, from the water. The flocculated precipitate is separated off by sedimentation, thereupon subjected to dehydration in drying beds and lateron dumped on a dumping site. Dependent from the residence time therein, the sludge will become more or less dehydrated and will show a variation in solids contents. By application of the invented method to the fresh sludge (process sludge) or the sludge from the dumping sites, any arsenic and phosphate as far as present may be removed with high efficiency from it and the residual material, after conversion to an iron salt, will be useful again as a flocculant in a water purification process.

Another very useful starting material is the iron hydroxide sludge generated as a by-product in the purification of subsoil water by aeration methods. Subsoil water which has been kept isolated from the air for a long period will contain many iron salts in reduced state as well as manganese. Aeration of such subsoil water will lead to the generation of iron hydroxide by oxidation and hydrolysis, whereupon such ich iron hydroxide will flocculate and simultaneously adsorb other dissolved substances such as manganese in oxide form. The flocculated precipitate is separated from the water by filtration and is allowed to stay in lagunes for dehydration or dumped into drying beds and/or on dumping sites, thus resulting into a more or less water-containing sludge. By application of the invented method to this sludge, manganese may be removed from it with high efficiency and the residual material, after conversion to an iron salt, is useful for flocculation purposes in a water purification process.

A third type of iron hydroxide sludge is generated in the purification of domestic waste water. Such waste water comprises many organic components and therefore, oxidative biological purification processes are frequently applied to it but a flocculation method can be used in addition thereto, particularly if it is desired to remove phosphates from the water at the same time. The sludge generated in this purification process will comprise many residues of dead micro-organisms in addition to viable matter and moreover iron hydroxide flocks which have adsorbed phosphates and perhaps compounds of other amphoteric substances from the water. By application of the invented method to such a sludge, the phosphate may-be removed with high efficiency and a residue of iron oxide may be obtained which, after conversion to an iron salt, may be re-used as a flocculant in a water purification process.

A totally different type of sludge is obtained by dredging harbours and rivers. This sludge will mainly comprise clay particles which have been contaminated with organic and inorganic substances including many metal compounds originating from the waste water of industries situated alongside the rivers. Should such a sludge contain arsenic and/or other amphoteric elements such as chromium, zinc, manganese or phosphorus, then such elements may be removed from it with the aid of the invented method and the remaining clay particles will normally be sufficiently pure to be used for fertilising purposes. Should the residual material still comprise elements such as cadmium which cannot be removed with the invented method, then the presence of such elements is not objectionable because the residual material has become better accessible to other purification and recycling methods.

In addition thereto it is conceivable that the invention can be applied to sludge types generated during other industrial processes than the above, and also to solid waste materials of industrial processes which have a certain content of arsenic and/or other amphoteric elements present.

In the first step of the invented method, the starting material is subjected to a thermal treatment in the presence of air or oxygen and of an alkaline reagent. During this treatment, which may be performed at option in an open vessel or a closed vessel, the organic components of the starting material are incinerated with the aid of oxygen from the air and inorganic components are decomposed with the aid of the alkaline reagent. The term "decomposed" will mean here: rendered to a form which facilitates the extraction with water in the next step.

Supposing that the starting material comprises arsenic-containing iron hydroxide together with organic substances and that sodium carbonate is used as an alkaline reagent, the reactions occurring may be represented as follows:

$$\text{Organic substances} + O_2 \rightarrow CO_2 + H_2O$$
$$2\,Fe(OH)_3.2FeAsO_4 + 3\,Na_2CO_3 \rightarrow 2\,Fe_2O_3 + 2\,Na_3AsO_4 + 3\,CO_2 + 3H_2O$$

It may be useful to subject the starting material beforehand to a pre-treatment for improving the efficiency. Thus, fresh dehydrated sludge normally has a solids content of only 5 to 10% which may be increased to a solids content of 20 to 35% by a stay in drying beds. In that case, it is advisable to dehydrate the sludge further prior to subjecting it to the thermal treatment. On the other hand, solid waste materials and sludge that has been stored for a long period on a dumping site are sufficiently dry already but their disadvantage is that they are composed of parts and chunks of varying dimensions. With such starting materials, it may advisable to grind the material first to reach a grain size of about 0.1 mm.

The oxygen needed for combustion of organic substances may be supplied in pure form, if so desired, but it may also be withdrawn from the air. Normally, supplying the air with the aid of a blower will be sufficient.

The alkaline reagent for decomposition of the inorganic components may in general be sodium or potassium carbonate, sodium or potassium hydrogencarbonate, sodium or potassium hydroxide or mixtures thereof, the use of sodium carbonate being preferred. The active component of the alkaline reagent is sodium or potassium oxide, which is generated together with carbon dioxide and/or water at elevated temperatures and which brings about a conversion of the iron and arsenic compounds, as far as present, to iron oxide and sodium or potassium arsenate. Should any other amphoteric element such as phosphorus, chromium, aluminium, manganese or zinc be present, they will be converted in a similar way to sodium or potassium phosphate, chromate, aluminate, manganate or zincate, respectively.

The required amount of alkaline reagent is dependent from several factors, such as the content of arsenic and other amphoteric elements in the starting material, the grain size distribution in the starting material and the type of reagent.

Experimental research has shown that the required amount of sodium carbonate for arsenic-containing iron hydroxide sludge having an arsenic content of 100 to 500 mg/kg on a dry basis will be about 2.5 mg of sodium carbonate per $\mu$g of arsenic. This figure will be somewhat higher for sodium bicarbonate since 1.6 g of $NaHCO_3$ corresponds to 1 g of $Na_2CO_3$. In giving these figures, it is supposed that the starting material has a relatively small average grain size of about 0.1 mm since the required amount of reagent will increase further with larger grains having a smaller contact area. The required amount of sodium carbonate may be lower and approach the stoichiometric value at arsenic concentrations of more than 500 mg/kg, whereas the required amount of $Na_2CO_3$ may be a multiple of said figure at arsenic concentrations lower than 100 mg/kg.

Preferably, the alkaline reagent is added beforehand to the starting material and is homogeneously distributed over the starting material in order to get a correct course of the decomposition reaction. In doing so, the reagent may be added at option in solid form or in the form of a concentrated aqueous solution.

The temperature and duration of the thermal treatment should be sufficiently high to bring about a substantially complete combustion of the organic components and a satisfactory decomposition of the inorganic components of the starting material. Temperatures of 600 to 900°C will normally be needed for an iron hydroxide sludge comprising arsenic and organic components, and in that case $Na_2CO_3$ will require somewhat higher temperatures than $NaHCO_3$. Higher and perhaps lower temperatures are sometimes possible for starting materials of other composition. If desired, samples from the material may be taken from time to time and the degree of combustion or decomposition may be determined on the basis of these samples.

As a result of this thermal treatment, a product is obtained which is substantially free of organic components and which comprises a mixture of iron oxide and sodium arsenate if the starting material was an arsenic-containing hydroxide sludge. This product can thereupon be subjected to the second step of the method.

In the second step of the invented method, the thermally treated material is extracted with water for removal of arsenic and/or other amphoteric elements in anion form from it. In the case of a sodium arsenate-containing material, this can be represented by:

$$Na_3AsO_4 \rightarrow 3\ Na^+ + AsO_4^{3-}.$$

The extractant is preferably demineralized water in order to avoid the incorporation of extraneous ions. Nevertheless, the extract will have a basic reaction because of the excess of alkaline reagent that has been used in the thermal treatment.

Prior to the extraction, the thermally treated material is preferably cooled till below 120°C in order to recover useful heat. The extraction itself can be effected at normal or slightly elevated temperatures, a temperature of 60°C being preferred.

The required amount of extraction water should be sufficient to reach a high extraction efficiency. An upper limit is not given because the water as used can be recovered in the next step and re-used. An extraction in successive stages may sometimes be advantageous.

The extraction step will result into a aqueous solution of arsenate and the like on one hand, and a solid material comprising more or less pure iron oxide in the case of iron hydroxide sludge and being suitable for re-use in a water purification process or for a useful application, on the other hand. Should this solid material still comprise undesired elements such as cadmium which cannot be removed in the aforesaid way, then a process for removing such elements in another way should still be used.

In the third step of the invented method, the resulting extract of the second step is contacted with an anion exchanger in hydroxyl form, in order to bind the arsenic and/or other amphoteric element in anion form to that anion exchanger. In the case that the extract comprises sodium arsenate, this step may be represented as follows:

$$Res\text{-}(OH)_3 + 3\ Na^+ + AsO_4^{3-} \rightarrow Res\text{-}AsO_4 + 3\ Na^+ + 3\ OH^-$$

wherein Res represents the ion exchanger.

The ion exchanger is preferably a strongly basic anion exchanger such as e.g. Duolite or Amberlite. Preferably, the aqueous extract is allowed to flow through two columns charged with anion exchanger and connected in series. This will prevent the arsenate from entering recirculation water upon breakthrough of a column. When the first column has a break-through, it can be regenerated and the second column can function as first or single column. After regeneration, the originally first column may be connected in series as a second column. The liquid leaving the column(s) comprises many sodium and hydroxyl ions (NaOH) but it is free of arsenic and other aforesaid anions and may be recycled to the second step of the method for re-use or may find a destination in a water purification process.

In the fourth step, the ion-exchanger loaded with arsenate or other aforesaid anions, is treated with an alkaline aqueous liquid in order to elute the arsenate or other aforesaid anions from it. The alkaline liquid is preferably an aqueous solution of sodium or potassium hydroxide which yields the best results.

In the case of an ion exchanger loaded with arsenate and an aqueous solution of sodium hydroxide as eluant, this step may be represented as follows:

$$Res\text{-}AsO_4 + 3\ Na^+ + 3\ OH^- \rightarrow Res\text{-}(OH)_3 + 3\ Na^+ + AsO_4^{3-}.$$

The result is an eluate which comprises the arsenate and/or other aforesaid anions in higher concentration and in a more pure condition than the extract of the second step. At the same time, a regenerated anion exchanger in hydroxyl form is obtained which is suitable again for performing the third step of the method.

It should be remarked that the use of an anion exchanger for adsorbing anions from an aqueous liquid, as well as the regeneration of such anion exchanger, is known per se from the art of water purification. Many details relating to the way of performing the third and fourth step of the method may therefore be derived from this known art.

In the fifth step, the resulting eluate is treated with a precipitant in order to separate the arsenic and/or other amphoteric element from it in the form of an insoluble salt. The precipitant is preferably lime or lime milk, which yields good results.

In the case that the eluate only comprises sodium arsenate and that lime milk is added thereto, this step may be represented as follows:

$$6\ Na^+ + 2\ AsO_4^{3-} + 3\ Ca_2^+ + 6\ OH^- \rightarrow Ca_3(AsO_4)_2 + 6\ Na^+ + 6\ OH^-.$$

The result is a precipitate of the insoluble arsenate and/or salt of another amphoteric element, which may be stored as a waste product. A residual alkaline aqueous liquid is suitable for re-use in the fourth step.

Several variants on the method as described are possible. One of these variants will be described below.

In the case that the starting material for the invented method is free or substantially free of organic material, the steps of thermal treatment and extraction with water can be omitted and both said steps can be replaced by a direct extraction with an alkaline aqueous liquid in order to remove arsenic and/or other amphoteric elements in anion form from it. This extraction may be effected at ambient temperature or elevated temperature. The alkaline aqueous liquid is preferably again an aqueous solution of sodium or potassium hydroxide.

Supposing that the starting material is an iron hydroxide sludge without organic substances but having arsenic present in the form of iron arsenate, the extraction step of this variant can be represented as follows:

$$FeAsO_4 + 3\ Na^+ + 3OH^- \rightarrow Fe(OH)_3 + 3\ Na^+ + AsO_4^{3-}$$

The result is, at one hand, a solid residue of the starting material which has been freed from arsenic or the like and which, if it comprises iron hydroxide, may be re-used as a flocculant in a water purification process after conversion to a soluble iron salt. On the other hand, an aqueous extract comprising arsenate ions and/or anions of other amphoteric elements is obtained which may be subjected without further measures to the aforesaid steps 3, 4 and 5 of the invented method for conversion of the arsenate or the like to an insoluble salt.

The invented method is illustrated by the following examples.

Example 1

An arsenic-containing iron hydroxide sludge from a dumping site comprised 451 g/kg of Fe and 296 mg/kg of As in its solid phase. This sludge was ground to reach an average grain size of 0.1 mm, then mixed with dry sodium carbonate (2 to 4 g of sodium carbonate per 5 g of solids) and heated to the air at 900°C in an open vessel for about 1 hour. The heated material was extracted once with demineralized water and the extract was worked up by contact with an anion exchanger, elution with sodium hydroxide solution and precipitation with lime milk.

The extract comprised 0.08 mg/l of Fe and 1.84 mg/l of As whereas the extraction residue comprised 456 g/kg of Fe and 20 mg/kg of As. So, a substantially complete removal of arsenic from the starting material without concomitant removal of iron had taken place.

Example 2

A freshly recovered arsenic-containing iron hydroxide sludge which comprised 417 g/kg of Fe and 293 mg/kg of As in its solid phase, was dried, mixed with sodium carbonate (2 to 4 g of sodium carbonate per 5 g of solids) and heated to the air at 900°C in an open vessel for about 1 hour. Thereafter, the heated material was extracted in one step with demineralized water.

The resulting extract comprised 0.00 mg/liter of Fe and 2.24 mg/liter of As, whereas the solid extraction residu comprised 464 g/kg of Fe and 11 mg/kg of As. So, a substantially complete removal of arsenic from the starting material had taken place.

Example 3

Another portion of the starting material of example 2 was dried, mixed with dry sodium hydrogencarbonate (3.2 to 6.4 g of sodium hydrogencarbonate per 5 g of solids) and heated to the air at 900°C in an open vessel for about 1 hour. Thereupon, the material was extracted in one step with demineralized water.

The resulting extract comprised 0.00 mg/liter of Fe and 2.40 mg/liter of As. Contrary thereto, the solid extraction residu comprised 441 g/kg of Fe and 6 mg/kg of As. So, in this case as well, a substantially complete removal of arsenic, in contrast to iron, from the starting material had taken place.

## Claims

1. A method of removing arsenic and/or other amphoteric elements from sludge or solid waste materials, characterised by performing the following steps in succession:
   - subjecting the sludge or solid waste materials to a thermal treatment in the presence of air or oxygen or of an alkaline reagent for combustion of organic and decomposition of inorganic components,
   - extracting the thermally treated material with water for removal of the arsenic and/or the other amphoteric elements in anion form from it,
   - treating the resulting extract with an anion exchanger in hydroxyl form for binding the arsenic and/or other amphoteric elements in anion form to that anion exchanger,
   - treating the anion exchanger loaded with said anions with an alkaline aqueous liquid for elution of the arsenic and/or other amphoteric elements in anion form from it, and regenerating the anion exchanger, and
   - treating the resulting eluate with a precipitant for separating the arsenic and/or other amphoteric elements from it in the form of an insoluble salt.

2. The method according to claim 1, characterised in that the other amphoteric elements to be removed comprise phosphorus, chromium, aluminium, manganese and/or zinc.

3. The method according to claim 1 or 2, characterised in that the alkaline reagent comprises sodium or potassium carbonate, hydrogencarbonate or hydroxyde or mixtures thereof.

4. The method according to claims 1-3, characterised in that the thermal treatment of the starting material, if it is an arsenic-containing iron hydroxide sludge, is effected at 600-900°C.

5. The method according to claims 1-4, characterised in that demineralized water is used as extracting water.

6. The method according to claims 1-5, characterised by using a strongly basic anion exchanger.

7. The method according to claims 1-6, characterised in that said alkaline aqueous eluant comprises an aqueous solution of sodium or potassium hydroxide.

8. The method according to claims 1-7, characterised in that said precipitant comprises lime or lime milk.

9. The method according to claims 1-8, characterised in that the steps of thermal treatment and extraction with water are omitted if the sludge or solid waste materials are substantially free of organic material, and that they are replaced by a direct extraction with an alkaline aqueous liquid for removal of arsenic and/or other amphoteric elements in anion form from it.

10. The method according to claim 9, characterised in that said alkaline aqueous extractant comprises an aqueous solution of sodium or potassium hydroxide.

## Patentansprüche

1. Verfahren zur Entfernung von Arsen und/oder anderen amphoteren Elementen aus Schlamm oder festen Abfallmaterialien, gekennzeichnet durch die aufeinanderfolgende Durchführung der folgenden Stufen:
   - thermische Behandlung des Schlamms oder der festen Abfallmaterialien in Gegenwart von Luft oder Sauerstoff oder eines alkalischen Reagenz zur Verbrennung der organischen und Zersetzung der anorganischen Komponenten,
   - Extraktion des thermisch behandelten Materials mit Wasser zur Entfernung des Arsens und/oder der anderen amphoteren Elemente in Anionenform,
   - Behandlung des erhaltenen Extrakts mit einem Anionenaustauscher in Hydroxylform zur Bindung des Arsens und/oder der anderen amphoteren Elemente in Anionenform an den Anionenaustauscher,
   - Behandlung des mit diesen Anionen beladenen Anionenaustauschers mit einer alkalischen wässrigen Flüssigkeit zur Elution des Arsens und/oder der anderen amphoteren Elemente in Anionenform und Regenerierung des Anionenaustauschers und

- Behandlung des erhaltenen Eluats mit einem Fällungsmittel zur Abtrennung des Arsens und/oder der anderen amphoteren Elemente in Form eines unlöslichen Salzes.

2. Verfahren nach Anspruch 1, **dadurch gekennzeichnet, daß** die zu entfernenden anderen amphoteren Elemente Phosphor, Chrom, Aluminium und/oder Zink sind.

3. Verfahren nach Anspruch 1 oder 2, **dadurch gekennzeichnet, daß** das alkalische Reagenz Carbonate, Hydrogencarbonate oder Hydroxide von Natrium oder Kalium oder Gemische hiervon sind.

4. Verfahren nach Anspruch 1 bis 3, **dadurch gekennzeichnet, daß** die thermische Behandlung des Ausgangsmaterials, falls es sich dabei um einen Arsen enthaltenden Eisenhydroxidschlamm handelt, bei 600 °C bis 900 °C durchgeführt wird.

5. Verfahren nach Anspruch 1 bis 4, **dadurch gekennzeichnet, daß** als Wasser zur Extraktion demineralisiertes Wasser verwendet wird.

6. Verfahren nach Anspruch 1 bis 5, **dadurch gekennzeichnet, daß** ein stark basischer Anionenaustauscher verwendet wird.

7. Verfahren nach Anspruch 1 bis 6, **dadurch gekennzeichnet, daß** das alkalische wässrige Elutionsmittel eine wässrige Lösung von Natriumhydroxid oder Kaliumhydroxid ist.

8. Verfahren nach Anspruch 1 bis 7, **dadurch gekennzeichnet, daß** das Fällungsmittel Kalk oder Kalkmilch ist.

9. Verfahren nach Anspruch 1 bis 8, **dadurch gekennzeichnet, daß** die Stufen der thermischen Behandlung und der Extraktion mit Wasser weggelassen werden, wenn der Schlamm oder die festen Abfallmaterialien praktisch frei an organischem Material sind, und daß diese Stufen durch eine direkte Extraktion mit einer alkalischen wässrigen Flüssigkeit zur Entfernung von Arsen und/oder anderen amphoteren Elementen in Anionenform ersetzt werden.

10. Verfahren nach Anspruch 9, **dadurch gekennzeichnet, daß** das alkalische wässrige Extraktionsmittel eine wässrige Lösung von Natriumhydroxid oder Kaliumhydroxid ist.

**Revendications**

1. Un procédé d'élimination d'arsenic et/ou d'autres éléments amphotères de déchets sous forme de boues ou de matériaux solides, caractérisé en ce que l'on met en oeuvre les étapes suivantes, successivement:
   - on soumet les déchets sous forme de boues ou sous forme de matériaux solides à un traitement thermique en présence d'air ou d'oxygène et d'un réactif alcalin en vue de la combustion des constituants organiques et la décomposition des constituants inorganiques;
   - on soumet le matériau traité thermiquement à une extraction à l'eau pour en éliminer l'arsenic et/ou les autres éléments amphotères sous forme anionique;
   - on traite l'extrait résultant avec un échangeur d'ion sous forme hydroxylée pour lier audit échangeur d'anion l'arsenic et/ou les autres éléments amphotères sous forme anionique;
   - on traite l'échangeur d'anion chargé desdits anions par une liqueur aqueuse alcaline pour en éluer l'arsenic et/ou les autres éléments amphotères sous forme anionique puis régénère ledit échangeur d'anion; et
   - on traite l'éluat obtenu par agent précipitant pour recueillir l'arsenic et/ou les autres éléments amphotères sous forme d'un sel insoluble.

2. Procédé selon la revendication 1, caractérisé en ce que les autres éléments amphotères à éliminer consistent en phosphore, chrome, aluminium, manganèse et/ou zinc.

3. Procédé selon la revendication 2, caractérisé en ce que le réactif alcalin consiste en: carbonate, carbonate acide ou hydroxyde de sodium ou de potassium, ou leurs mélanges.

4. Procédé selon les revendications 1 à 3, caractérisé en ce que le traitement thermique du matériau de départ, lorsqu'il s'agit d'une boue d'hydroxyde de fer contenant de l'arsenic, est effectué à une température de 600 à 900°C.

5. Procédé selon l'une quelconque des revendications 1 à 4, caractérisé en ce que l'eau déminéralisée est utilisée pour l'extraction.

6. Procédé selon l'une quelconque des revendications 1 à 5, caractérisé en ce que l'on utilise un échangeur d'anion fortement basique.

7. Procédé selon l'une quelconque des revendications 1 à 6, caractérisé en ce que ledit éluant aqueux alcalin comprend une solution aqueuse d'hydroxyde de sodium ou de potassium.

8. Procédé selon l'une quelconque des revendications 1 à 7, caractérisé en ce que ledit agent précipitant comprend de la chaux ou du lait de chaux.

9. Procédé selon l'une quelconque des revendications 1 à 8, caractérisé en ce que les étapes de traitement thermique et d'extraction à l'eau sont omises si les déchets sous forme de boues ou de matériaux solides sont sensiblement exempts de matériaux organiques, et en ce qu'elles sont remplacées par une extraction directe avec une liqueur aqueuse alcaline pour l'élimination de ces déchets d'arsenic et/ou autres éléments amphotères sous forme anionique.

10. Procédé selon la revendication 9, caractérisé en ce que ledit agent d'extraction aqueux alcalin comprend une solution aqueuse d'hydroxyde de sodium ou de potassium.